# EUROPEAN PATENT SPECIFICATION

(11) **EP 2 371 229 B1**
(45) Date of publication and mention of the grant of the patent: **18.12.2013**
(21) Application number: 11159391.9
(22) Date of filing: 23.03.2011
(51) Int. Cl.: A41H 43/04, D06H 5/00, B29C 65/52, B29C 65/74, A41D 27/24

(54) **Cloth bonding apparatus**
Vorrichtung zum Verbinden von Stoff
Appareil de liaison de tissus

(30) Priority: 31.03.2010 JP 2010080060
(43) Date of publication of application: 05.10.2011
(73) Proprietor: Brother Kogyo Kabushiki Kaisha, Nagoya-shi, Aichi 467-8561 (JP)
(72) Inventor: Iwakoshi, Hiroyasu, Nagoya-shi Aichi 467-8562 (JP); Umeda, Kazutoshi, Nagoya-shi Aichi 467-8562 (JP); Enya, Tetsuji, Nagoya-shi Aichi 467-8562 (JP); Yamaura, Hiroki, Nagoya-shi Aichi 467-8562 (JP); Nishimura, Kazuto, Nagoya-shi Aichi 467-8562 (JP); Nemoto, Yoshimitsu, Nagoya-shi Aichi 467-8562 (JP); Minagawa, Yuichiro, Nagoya-shi Aichi 467-8562 (JP)
(74) Representative: Prüfer & Partner GbR European Patent Attorneys

(56) References cited:
- EP-A1- 1 958 524
- EP-A1- 1 958 525
- EP-A2- 1 027 981
- EP-A2- 1 604 807
- EP-A2- 1 844 920
- CH-A- 478 279
- FR-A1- 2 437 932
- US-A1- 2003 010 439

## Description

### BACKGROUND

The present invention relates to a cloth bonding apparatus that bonds two layers of cloth with an adhesive.

The cloth bonding apparatus is adapted to bond cloths with an adhesive, instead of sewing the cloths with a needle and a thread. By bonding the cloths with the adhesive, the cloth bonding apparatus can eliminate unevenness due to the thread that may be formed in the cloth surfaces when the cloths are sewn with the thread. The cloth surfaces processed by the bonding apparatus are smooth. Thus, the bonding apparatus is capable of manufacturing nice and soft clothes, and the like.

For example, a sewing machine described in Japanese Patent Application Laid-open No. 1995-70807 is adapted to inject an adhesive from a nozzle to a bonding portion of cloths to be sewn. The sewing machine presses and heats the cloths to be sewn after injecting the adhesive, thereby bonding the cloths.

A cloth end cutting apparatus cuts cloths while sewing the cloths. For example, a cloth end cutting apparatus described in Japanese Patent Application Laid-open No. 2007-37650 includes a fixed knife and a rotary knife. The fixed knife and the rotary knife cut cloths in cooperation with each other.

CH 478 279 A discloses a generic cloth bonding apparatus according to the preamble of claim 1.

The bonding strength between cloths may be weak immediately after the cloth bonding apparatus bonds the cloths with each other. Therefore, when the cloths are cut while the cloths are bonded together, there is a possibility that the cloths are misaligned from each other.

It is an object of the present invention to provide a cloth bonding apparatus that is capable of preventing two layers of cloth from being misaligned from each other when the two layers of cloths are cut.

A cloth bonding apparatus according to the present invention includes a nozzle, a first feeding portion, a second feeding portion, and a cutting portion. The nozzle is adapted to be placed between opposed two layers of cloth. An adhesive is dischargeable between the two layers of cloth from the nozzle. The first feeding portion is located at a downstream side of the nozzle in a feeding direction of the two layers of cloth, and rotates to feed the two layers of cloth. The second feeding portion is opposed to the first feeding portion. The second feeding portion is adapted to sandwich the two layers of cloth between the first feeding portion and second feeding portion, and rotates to feed the two layers of cloth. The cutting portion is located on a side of the first feeding portion and the second feeding portion. The cutting portion is adapted to cut the two layers of cloth. The first feeding portion and the second feeding portion can fix the two layers of cloth by sandwiching the two layers of cloth therebetween. The cutting portion can cut the two layers of cloth on a side of a position where the two layers of cloth are thus fixed. Therefore, the cloth bonding apparatus can prevent the two layers of cloth from being misaligned from each other when the two layers of cloths are cut.

In the cloth bonding apparatus, the cutting portion includes a first blade. The first blade is provided to the first feeding portion, and is a rotary blade that rotates in unison with the first feeding portion. In this case, no gap is present between the first blade and the first feeding portion. Therefore, the cutting portion can cut the two layers of cloth in the vicinity of a position where the first feeding portion and the second feeding portion sandwich the two layers of cloth therebetween.

In the cloth bonding apparatus, the cutting portion further includes a second blade. The second blade repeatedly comes into contact with and separate from the first blade, and the second blade is adapted to sandwich the two layers of cloth between the first blade and the second blade to cut the two layers of cloth. In this case, the cutting portion can reliably cut the two layers of cloth by sandwiching the two layers of cloth between the first blade and the second blade.

In the cloth bonding apparatus, the first feeding portion includes a belt and a cylindrical pulley. The belt is adapted to sandwich the two layers of cloth between the belt and the second feeding portion and feed the two layers of cloth. The pulley drives the belt. Further, the first blade is opposed to a side face of the belt, and is provided to a side face of the pulley. In this case, the first blade can be positioned in the vicinity of the side face of the belt. Therefore, the cutting portion can cut the two layers of cloth in the vicinity of a position where the belt and the second feeding portion sandwich the two layers of cloth therebetween.

The cloth bonding apparatus may further include a second blade drive mechanism that drives the second blade such that the second blade repeatedly comes into contact with and separates from the first blade. Further, the second blade and the second blade drive mechanism may be configured such that the second blade and the second blade drive mechanism can be mounted to and removed from the cloth bonding apparatus. In this case, when the two layers of cloth are not to be cut, an operator can remove the second blade and the second blade drive mechanism from the cloth bonding apparatus.

In the cloth bonding apparatus, the first blade may not project toward the second feeding portion with respect to a surface of the belt that is opposed to the second feeding portion. In this case, the cloth bonding apparatus can prevent the first blade from contacting the two layers of cloth when the two layers of cloth are not to be cut.

In the cloth bonding apparatus, an outer peripheral surface of the first blade may be in parallel to a surface of the belt that is opposed to the second feeding portion. In this case, the outer peripheral surface is not pointed. Therefore, the cloth bonding apparatus can prevent injury even when an operator touches the outer peripheral surface of the first blade.

The cloth bonding apparatus may be configured such that a position where the cutting portion cuts the two layers of cloth can be moved in a direction that is parallel to a surface of the belt that is opposed to the second feeding portion, and that is perpendicular to the feeding direction of the two layers of cloth. In this case, an operator can move the position where the two layers of cloth are cut with respect to a position where the adhesive is discharged from the nozzle.

The cloth bonding apparatus may further include a suction portion. The suction portion may be located on an opposite side from a side where the pulley is located with respect to a position where the cutting portion cuts the two layers of cloth. The suction portion may be adapted to suck a scrap that is generated when the cutting portion cuts the two layers of cloth. In this case, the cloth bonding apparatus can prevent scraps from being scattered.

The cloth bonding apparatus may further include a connecting member that connects the first blade and the pulley with each other. The connecting member may be configured such that the connecting member does not project further than the first blade in a direction from the pulley to the suction portion. In this case, the connecting member will not contact the suction portion. Therefore, the suction portion can be positioned in the vicinity of the pulley and the first blade. The suction portion can thus suck the scraps efficiently.

### BRIEF DESCRIPTION OF THE DRAWINGS

Exemplary embodiments of the present disclosure will be described below in detail with reference to the accompanying drawings in which:
Fig. 1 is an overall perspective view of a cloth bonding apparatus 1;
Fig. 2 is a perspective view of a bonding machine 2;
Fig. 3 is a front view of the bonding machine 2;
Fig. 4 is a perspective view of the bonding machine 2 in which a roller holding portion 20, an upper feed roller 22, a support portion 16 and a nozzle 17 are not shown;
Fig. 5 is a perspective view of an internal structure of the bonding machine 2;
Fig. 6 is a perspective view of a lower feeding portion 37 and a second blade drive mechanism 70 as viewed from an upper left side;
Fig. 7 is a perspective view of the lower feeding portion 37 and the second blade drive mechanism 70 as viewed from an upper right side;
Fig. 8 is a vertical sectional view of the lower feeding portion 37 and the second blade drive mechanism 70 as viewed from a front side in a state where they have been moved leftward;
Fig. 9 is an enlarged vertical sectional view of a main portion of Fig. 8;
Fig. 10 is a vertical sectional view of a state where the lower feeding portion 37 have been moved rightward from the state shown in Fig. 9;
Fig. 11 is an exploded perspective view of the bonding machine 2;
Fig. 12 is a left side view of the lower feeding portion 37 and the second blade drive mechanism 70 in a state where a second blade 721 is in contact with a first blade 35;
Fig. 13 is a left side view of the lower feeding portion 37 and the second blade drive mechanism 70 in a state where the second blade 721 and the first blade 35 are separated from each other;
Fig. 14 is a left side view of the bonding machine 2 at the time of a bonding operation;
Fig. 15 is a partial sectional view taken along the line I-I in Fig. 14; and
Fig. 16 is a perspective view of a second blade body 701.

### DETAILED DESCRIPTION OF EXEMPLARY EMBODIMENTS

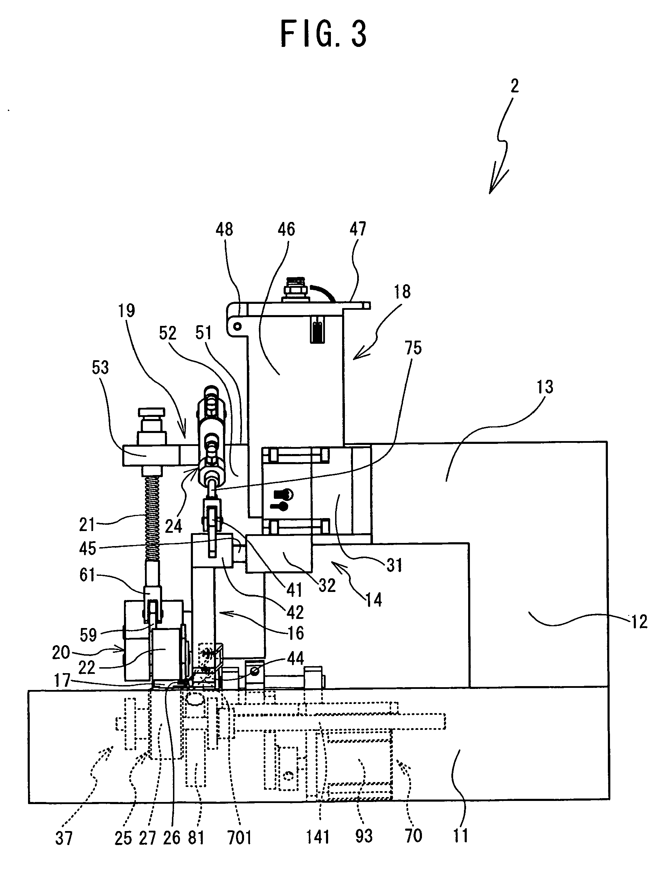

A cloth bonding apparatus 1 according to the present invention will be described below with reference to the drawings. In the following description, it is defined that the upper side, the lower side, the right side, the left side, the front face side, and the back face side of FIG. 3 are the upper side, the lower side, the right side, the left side, the front side, and the back side of a bonding machine 2, respectively.

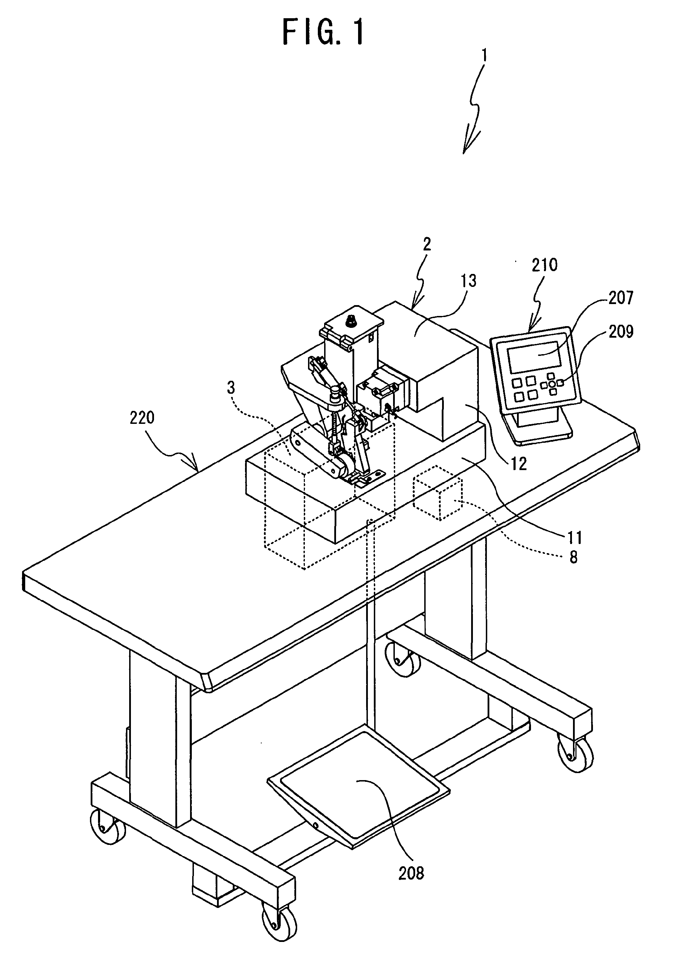

An overall configuration of the cloth bonding apparatus 1 will be described with reference to Fig. 1. As shown in Fig. 1, the cloth bonding apparatus 1 includes the bonding machine 2, an operation panel 210, a pedal 208, a control box 3, and a scrap collecting portion 8. The bonding machine 2 and the operation panel 210 are fixed on a table 220. The bonding machine 2 applies an adhesive between two layers of cloth arranged oppositely, and presses and feeds the two layers of cloth. The two layers of cloth are bonded together through the above operation of the bonding machine 2. A configuration of the bonding machine 2 will be described later in detail.

The operation panel 210 includes a display portion 207 and a plurality of keys 209. The display portion 207 displays various items of information thereon. The keys 209 are directed for inputting various items of information. A worker may set various operations of the bonding machine 2 by operating the keys 209 while looking at the display portion 207.

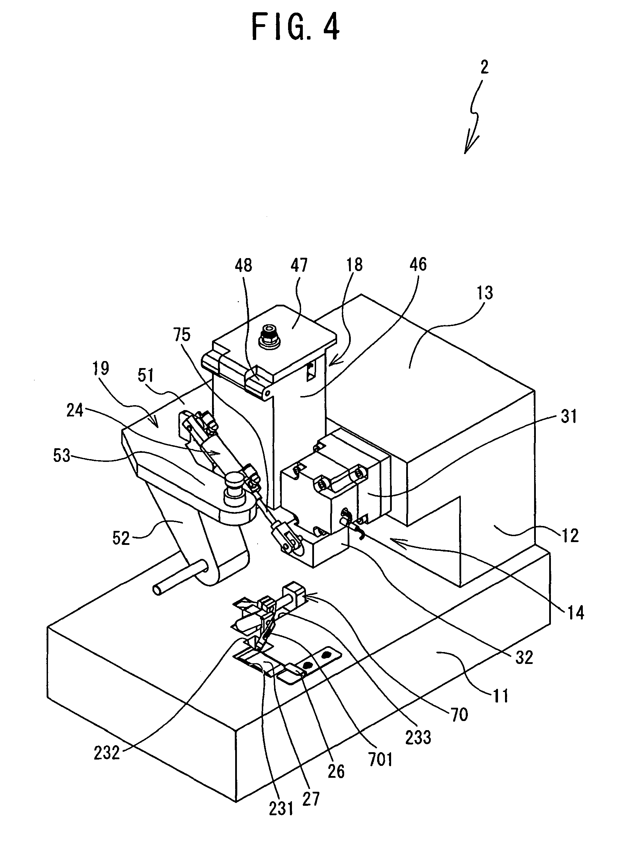

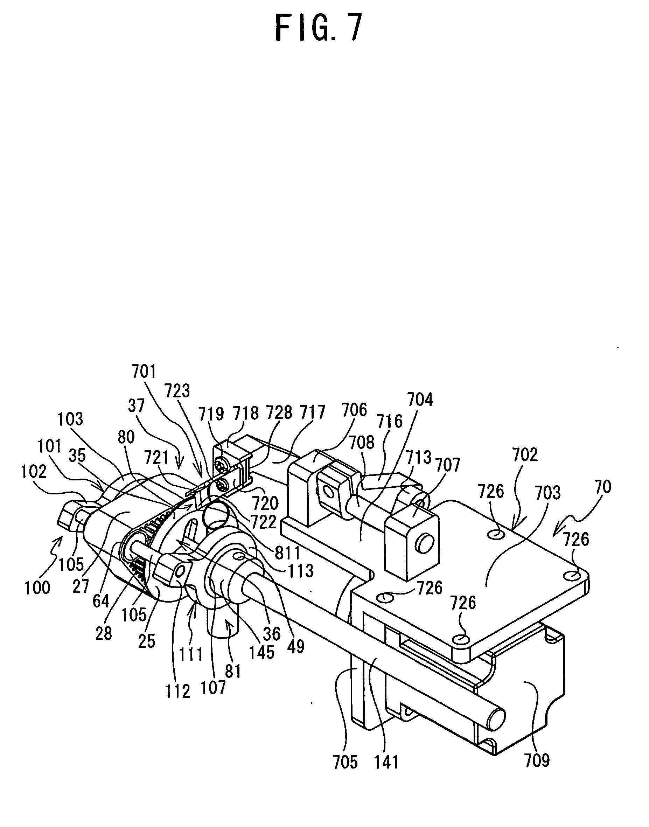

The pedal 208 is positioned below the table 220. The worker may use the pedal 208 to adjust a feed speed of the cloths. The control box 3 is fixed on the lower face of the table 220. The control box 3 stores a control board having a CPU and the like mounted thereon. The control box 3 is electrically connected to the bonding machine 2, the operation panel 210, the pedal 208, and a second blade drive mechanism 70 (see Fig. 4) that will be described later in detail. The scrap collecting portion 8 is fixed to the lower face of the table 220. The scrap collecting portion 8 is connected to a suction pipe 81 (see Fig. 7) that will be described later. The scrap collecting portion 8 includes a suction device (not shown) that sucks air. When the suction device sucks air, scraps of cloth are sucked through the suction pipe 81. The scrap collecting portion 8 collects scraps sucked through the suction pipe 81.

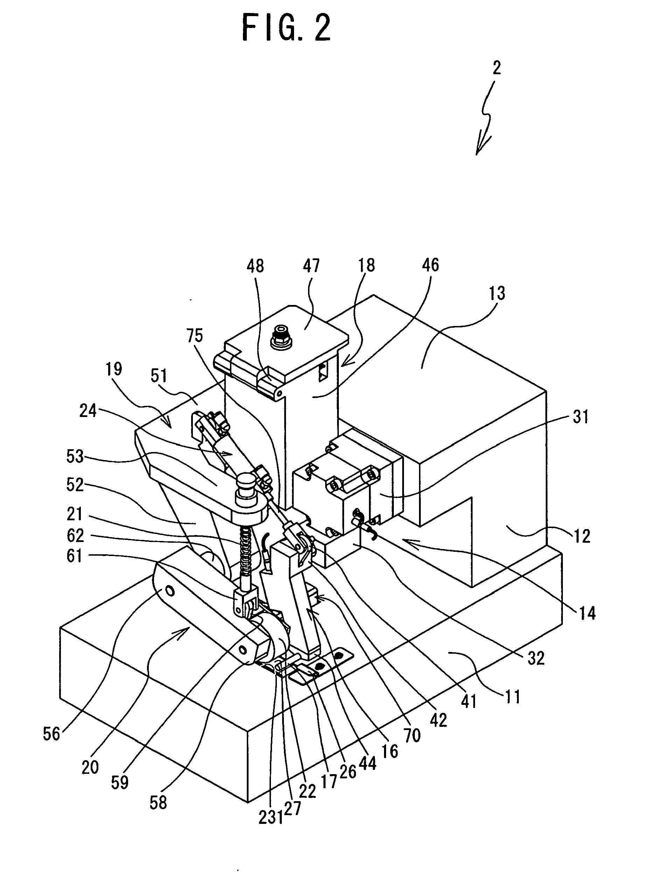

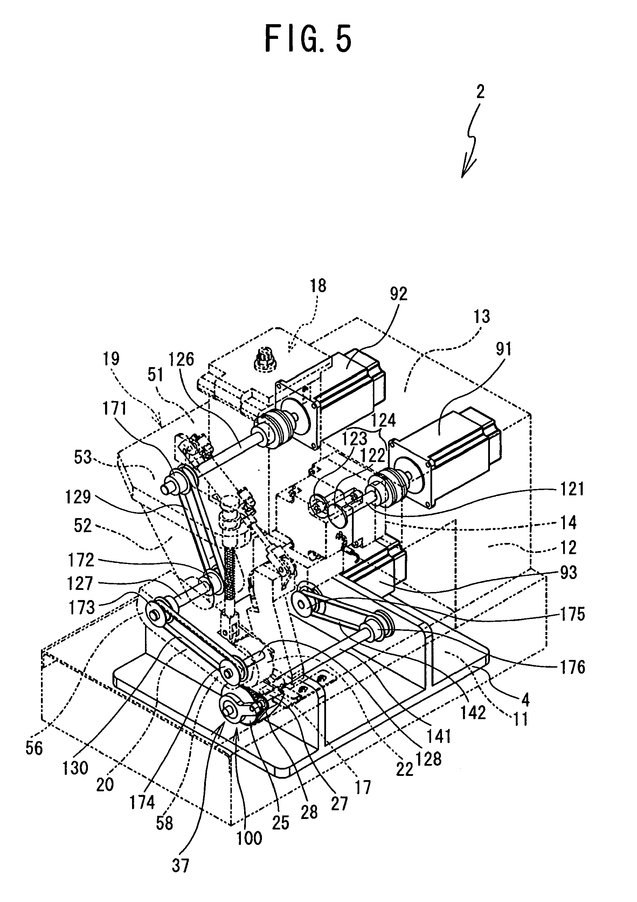

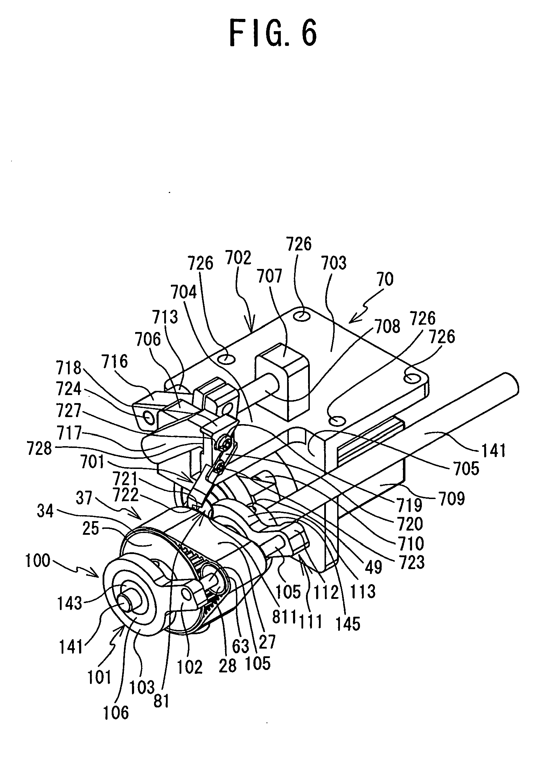

A configuration of the bonding machine 2 will be described with reference to Figs. 2 to 5. As shown in Figs. 2 and 3, the cloth bonding machine 2 includes a bed portion 11, a pillar portion 12 and an arm portion 13. The bed portion 11 has a substantially rectangular parallelepiped shape. The pillar portion 12 extends vertically upwards from the right end of the bed portion 11. The arm portion 13 is connected to the upper end of the pillar portion 12 and extends leftward from the left side of the pillar portion 12. The bed portion 11 is provided therein with a first pulley 25, a second pulley 28 (see Figs. 5 and 6), a feed belt 27, the second blade drive mechanism 70, a third motor 93, the suction pipe 81 and the like. The feed belt 27 presses and feeds cloths together with an upper feed roller 22 that will be described later. The third motor 93 drives the first pulley 25.

As shown in Fig. 2, the left end of the arm portion 13 supports a pump casing 14, a storage chamber 18 and a beam portion 19, from front to back in this order. The arm portion 13 includes therein a first motor 91 (see Fig. 5), a second motor 92 (see Fig. 5) and the like. The first motor 91 drives a gear pump 124 (see Fig. 5). The second motor 92 drives the upper feed roller 22.

The pump casing 14 will be described. As shown in Figs. 2 and 3, the pump casing 14 includes a first pump casing 31 and a second pump casing 32. The first pump casing 31 is a substantially cubic member. The first pump casing 31 is fixed on the left side face of the arm portion 13. The first pump casing 31 includes therein the gear pump 124 (see Fig. 5) and the like. The gear pump 124 supplies an appropriate amount of the adhesive to a nozzle 17 with high accuracy. The second pump casing 32 is a substantially rectangular parallelepiped member. The second pump casing 32 extends downward from the left end of the first pump casing 31.

The second pump casing 32 includes a shaft portion 45 (see Fig. 3) on its left side. The shaft portion 45 is connected to the right side of an upper end 42 of a support portion 16 swingably supports the support portion 16 around the shaft portion 45. The pump casing 14 includes two channels. One of the channels leads the adhesive from the storage chamber 18 to the gear pump 124. The other channel leads the adhesive from the gear pump 124 to the support portion 16.

As shown in Figs. 2 and 3, the support portion 16 has a substantially rectangular parallelepiped shape. A small gap is present between a lower end 44 of the support portion 16 and the bed portion 11. The support portion 16 includes therein a channel that leads the adhesive from the pump casing 14 to the nozzle 17. The support portion 16 is provided with the nozzle 17 at the lower end 44. The nozzle 17 extends leftward from the support portion 16. The support portion 16 includes a drive transmitting portion 41 at the upper end 42. The drive transmitting portion 41 is connected to a movable portion 75 of an air cylinder 24.

The support portion 16 swings back and forth about the shaft portion 45 along with the back-and-forth movement of the movable portion 75 of the air cylinder 24. The nozzle 17 moves along with the swing of the support portion 16 to a position where a bonding work is performed (see Figs. 2 and 3) and to a position where maintenance is performed (not shown).

The nozzle 17 has a cylindrical shape. The nozzle 17 has at its lower portion a discharge port (not shown) through which the adhesive is discharged. When the worker performs the bonding work, the discharge port opposes the bed portion 11. When the worker performs the bonding work, the worker inserts the nozzle 17 between two oppositely arranged layers of cloth. The gear pump 124 supplies the adhesive to the nozzle 17 through the channel provided inside the support portion 16. The nozzle 17 discharges the adhesive from the discharge port onto the cloth. The adhesive may be applied on the surface of the lower cloth positioned below the nozzle 17.

A guide portion 26 is provided in front of the nozzle 17. The guide portion 26 has a rectangular shape in a plan view and a hook-shape in a front view. The guide portion 26 is adapted to align positions of the two layers of cloth and guides the two layers of cloth.

As shown in Figs. 2 and 3, the storage chamber 18 has a substantially rectangular parallelepiped shape. The storage chamber 18 extends upward from the left side of the arm portion 13 and from the back of the pump casing 14. The storage chamber 18 includes a body portion 46, a cover portion 47, and a cover shaft portion 48. The body portion 46 has a bottomed tube shape having an opening at the top. The cover portion 47 covers the opening at the top of the body portion 46. The body portion 46 is provided with the cover shaft portion 48 at the upper end. The cover shaft portion 48 supports the cover portion 47 in an openable/closable manner. The storage chamber 18 stores a hot-melt adhesive (not shown) inside the body portion 46. The storage chamber 18 supplies the stored adhesive to the nozzle 17 via the gear pump 124. The hot-melt adhesive melts when heated to a predetermined temperature, and solidifies at a temperature below the predetermined temperature.

As shown in Fig. 2, the beam portion 19 includes a body portion 51, a spring support portion 53, and a column portion 52. The body portion 51 that extends horizontally leftward from the rear left end of the arm portion 13. The spring support portion 53 has a plate shape and extends horizontally forward from the left end portion of the body portion 51. The column portion 52 extends obliquely downward and forward from the body portion 51 at about 45 degrees relative to the horizontal plane. There is a gap between the lower end of the column portion 52 and the bed portion 11.

The spring support portion 53 has a hole at the front end portion. The spring support portion 53 supports a shaft portion 61 in a vertically movable manner. The shaft portion 61 is inserted through a spring 21. The upper end portion of the shaft portion 61 is inserted through the hole of the spring support portion 53. The column portion 52 has a shaft portion 62 extending horizontally leftward from the lower end part thereof. The shaft portion 62 supports a rear end portion 56 of a roller holding portion 20. The roller holding portion 20 may swing a front end portion 58 in the vertical direction with the shaft portion 62 as the center of swing. The body portion 51 is provided with the air cylinder 24 at the right side of the spring support portion 53. The air cylinder 24 is directed for switching the position of the support portion 16.

The roller holding portion 20 will be described. The front end portion 58 of the roller holding portion 20 rotatably supports the cylindrical upper feed roller 22. The upper feed roller 22 is positioned in the vicinity of the back of the nozzle 17 that extends from the support portion 16. It may be preferable for the nozzle 17 to be positioned within a distance that is twice the diameter of the upper feed roller 22 from the rotation center of the upper feed roller 22, for example. The roller holding portion 20 includes a shaft support portion 59 on the upper face of the front portion. The shaft support portion 59 supports the lower end of the shaft portion 61 that is inserted through the spring 21. The spring 21 is interposed between the spring support portion 53 and the lower end of the shaft portion 61. The spring 21 urges the shaft portion 61 downwards, thereby urging the roller holding portion 20 connected to the shaft portion 61 downwards.

As shown in Figs. 2 and 4, the bed portion 11 includes a hole 231 in a range extending from a section below the nozzle 17 to a section below the upper feed roller 22. A part of the feed belt 27 disposed in the bed portion 11 slightly projects upward from the hole 231. The feed belt 27 rotates together with the upper feed roller 22. The feed belt 27 and the upper feed roller 22 sandwich cloths from below and above. The feed belt 27 and the upper feed roller 22 feed the sandwiched cloths from front to back or from back to front. It is to be noted that a normal feeding direction of the cloths is the direction from front to back of the bonding machine 2. Accordingly, the front side of the bonding machine 2 corresponds to an upstream side in the feeding direction, and the back side of the bonding machine 2 corresponds to a downstream side in the feeding direction.

As shown in Fig. 4, the bed portion 11 has a hole 232 connected to a right side of a rear portion of the hole 231. The hole 232 has a rectangular shape in a plan view, and is integrally formed with the hole 231. A front end of the hole 232 is located at the rear portion of the hole 231. The rear end of the hole 232 is located behind the rear end of the hole 231. The bed portion 11 has a hole 233 extending rightward from a position behind the hole 232. The hole 233 includes a hole having a rectangular shape extending in the left-right direction in a plan view and a hole that is connected to a rear end of the rectangular hole and that extends rearward. As shown in Figs. 3 and 4, a part of the second blade drive mechanism 70 disposed in the bed portion 11 projects from the hole 233 above an upper side of the bed portion 11. The second blade drive mechanism 70 includes a second blade body 701. The second blade body 701 extends toward the hole 232 above the upper side of the bed portion 11.

An inner configuration of the bonding machine 2 will be described with reference to Fig. 5. It is noted that the second blade drive mechanism 70 and the suction pipe 81 (see Fig. 3) are not shown in Fig.5.

The first motor 91 transmits a rotation drive force to the gear pump 124 via a rotary shaft 121 thereby driving the gear pump 124. The gear pump 124 includes a drive gear 122 and a driven gear 123. The drive gear 122 is fixed at the left end of the rotary shaft 121. The drive gear 122 rotates along with the rotary shaft 121. The driven gear 123 meshes with the drive gear 122. The first motor 91 is positioned inside the arm portion 13 and to the right side of the portion where the pump casing 14 is connected to the arm portion 13. The rotary shaft 121 extends inside the pump casing 14 leftward from the rotary shaft of the first motor 91. The drive gear 122 and the driven gear 123 supply an appropriate amount of the adhesive to the nozzle 17.

The second motor 92 transmits a rotation drive force to the upper feed roller 22 via a rotary shaft 126, a belt 129, a rotary shaft 127, a belt 130, and a rotary shaft 128, thereby driving the upper feed roller 22. The second motor 92 is positioned inside the arm portion 13 and to the right side of the portion where the beam portion 19 is connected with the arm portion 13. The rotary shaft 126 extends leftward from the rotary shaft of the second motor 92 and extends through the body portion 51. The left end of the rotary shaft 126 is positioned inside the column portion 52. The left end of the rotary shaft 126 supports a pulley 171. The right end of the rotary shaft 127 is positioned inside the lower end of the column portion 52. The left end of the rotary shaft 127 is positioned inside the rear end portion 56 of the roller holding portion 20. The right and left ends of the rotary shaft 127 support pulleys 172 and 173, respectively. The rotary shaft 128 is a rotary shaft of the upper feed roller 22. The left end of the rotary shaft 128 is positioned inside the front end portion 58 of the roller holding portion 20 and supports a pulley 174. The right end of the rotary shaft 128 projects from the front end portion 58 and supports the upper feed roller 22. The belt 129 is crossed between the pulley 171 at the left end of the rotary shaft 126 and the pulley 172 at the right end of the rotary shaft 127 inside the column portion 52. The belt 130 is crossed between the pulley 173 at the left end of the rotary shaft 127 and the pulley 174 at the left end of the rotary shaft 128 inside the roller holding portion 20.

The lower feeding portion 37 will be described briefly. The lower feeding portion 37 includes the first pulley 25, the second pulley 28, a pulley support portion 100 that supports the second pulley 28, and the feed belt 27 that is a ring-like endless belt. The first pulley 25 and the second pulley 28 have substantially cylindrical shapes. Axial directions of rotation axes of the first pulley 25 and the second pulley 28 are left-right horizontal directions. The diameter of the first pulley 25 is about four times of that of the second pulley 28. The first pulley 25 is disposed below the upper feed roller 22. The second pulley 28 is disposed diagonally below and in front of the nozzle 17. When the first pulley 25 rotates, the feed belt 27 wound around the first pulley 25 and the second pulley 28 also rotates. Details of the lower feeding portion 37 will be described later.

The third motor 93 transmits a rotation drive force to the first pulley 25 via a rotary shaft 141 and a belt 142 thereby driving the first pulley 25. The first pulley 25 is fixed to the rotary shaft 141. The first pulley 25 is positioned inside the bed portion 11 and below the upper feed roller 22 across the feed belt 27. The bed portion 11 has a support portion 4 therein. The support portion 4 rotatably supports the rotary shaft 141. The belt 142 is crossed between a pulley 175 of a rotary shaft of the third motor 93 and a pulley 176 at the right end of the rotary shaft 141 inside the bed portion 11.

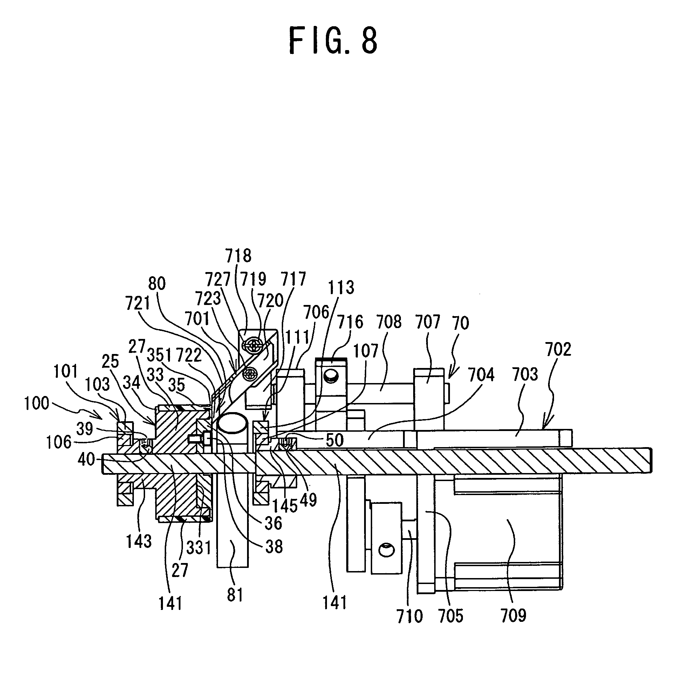

The lower feeding portion 37 and the suction pipe 81 will be described with reference to Figs. 6 to 10. As shown in Figs. 6 to 8, the pulley support portion 100 of the lower feeding portion 37 includes a left side plate 101 and a right side plate 111. The left side plate 101 includes an arm portion 102 and a ring portion 103. The ring portion 103 has a center located at a center of the rotation axis of the first pulley 25. The diameter of the ring portion 103 is smaller than that of the first pulley 25. The ring portion 103 includes a hole at its center. The first pulley 25 includes a projection portion 143 on its left side face (see Fig. 8). The projection portion 143 projects leftward along a periphery of a rotation shaft 141. A left end of the projection portion 143 and a left end of the rotation shaft 141 are inserted through the hole of the ring portion 103. A bearing 106 is provided in the hole of the ring portion 103 and between the ring portion 103 and the projection portion 143. The arm portion 102 projects diagonally upward and forward from the ring portion 103.

The right side plate 111 is provided on the right side of the first pulley 25. The right side plate 111 includes an arm portion 112 and a ring portion 113. The rotation shaft 141 and a left portion of a fixed portion 145, which is fixed to a periphery of the rotation shaft 141, are inserted through a hole formed at a center of the ring portion 113. A bearing 107 is provided in the hole of the ring portion 113 and between the ring portion 113 and the fixed portion 145. The left portion of the fixed portion 145 is located in the bearing 107. The diameter of a portion of the fixed portion 145 that is inserted through the hole of the ring portion 113 is different from the diameter of other portion of the fixed portion 145. More specifically, the diameter of the portion of the fixed portion 145 that is inserted through the hole of the ring portion 113 is smaller than that of the other portion of the fixed portion 145. That is, the fixed portion 145 has a step. The step is adapted to determine a position of the lower feeding portion 37 in the left-right direction.

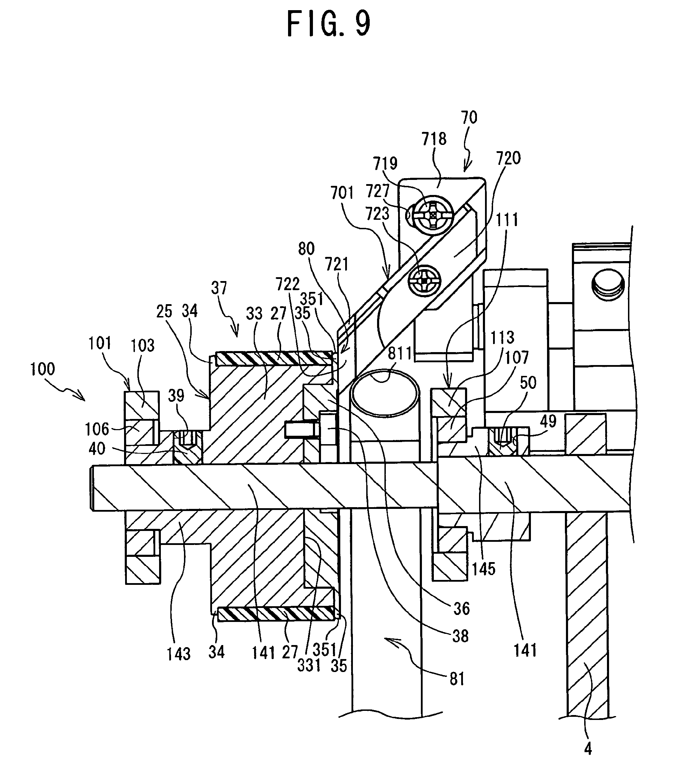

As shown in Figs. 8 and 9, a right portion of the fixed portion 145 includes a screw hole 49 through which a setscrew 50 is inserted. The screw hole 49 extends from an outer periphery of the fixed portion 145 toward the rotation shaft 141. The setscrew 50 is screwed into the screw hole 49 and is pressed against the rotation shaft 141, thereby fixing the fixed portion 145 to the rotation shaft 141.

As shown in Figs. 6 to 8, the arm portion 112 of the right side plate 111 projects diagonally upward and forward from the ring portion 113. The suction pipe 81 is provided between the first pulley 25 and the right side plate 111. Details of the suction pipe 81 will be described later. A shaft portion 105 is provided between a tip end of the arm portion 102 and a tip end of the arm portion 112. The shaft portion 105 rotatably supports the second pulley 28. A distance between the first pulley 25 and the second pulley 28 is always constant. The feed belt 27 is wound around the first pulley 25 and the second pulley 28. The feed belt 27 and the second pulley 28 rotate as the first pulley 25 rotates.

The first pulley 25 and the first blade 35 will be described. As shown in Figs. 8 and 9, the first pulley 25 includes a cylindrical body portion 33 and a flange 34. The flange 34 protrudes from a left face of the body portion 33 in a radially outward direction. The body portion 33 has on its right surface a recessed portion 331 that is recessed leftward. A circular member 36 that is circular in shape in a side view is fitted along the recessed portion 331 and a right face of the body portion 33. The circular member 36 has a first blade 35 along its periphery. The first blade 35 is disposed on a right face of the first pulley 25. The first blade 35 protrudes from a right face side of the first pulley 25 in a radially outward direction. A bolt 38 connects the circular member 36 and the body portion 33 in the recessed portion 331. Therefore, the first pulley 25 and the circular member 36 having the first blade 35 can integrally rotate. The bolt 38 does not project rightward from the first blade 35. The first blade 35 and a second blade 721, which will be described later, may sandwich and cut cloths. A position where the first blade 35 and the second blade 721 cut cloths is called a cutting position 80. Details of the cutting operation of cloths will be described later.

The feed belt 27 is wound around a peripheral wall surface of the body portion 33 of the first pulley 25. The flange 34 and the first blade 35 are respectively opposed to the feed belt 27 and sandwich the feed belt 27 therebetween. The first blade 35 also has a function as a flange of the first pulley 25. Therefore, when the first pulley 25 rotates, the feed belt 27 does not come off the first pulley 25.

The first blade 35 and the flange 34 do not project toward the upper feed roller 22 above the surface of the feed belt 27 that is opposed to the upper feed roller 22. Therefore, when the first blade 35 does not cut cloths, the first blade 35 is not in contact with the cloths. An outer peripheral surface 351 of the first blade 35 is in parallel to a surface of the feed belt 27, and the outer peripheral surface 351 of the first blade 35 is not pointed. Therefore, it is possible to prevent injury even when a finger of an operator touches the outer peripheral surface 351 of the first blade 35.

As shown in Figs. 8 and 9, the projection portion 143 has a screw hole 39 for receiving a setscrew 40. The screw hole 39 extends from an outer periphery of the projection portion 143 toward the rotation shaft 141. The setscrew 40 is screwed into the screw hole 39 and pressed against the rotation shaft 141, thereby fixing the first pulley 25 to the rotation shaft 141. An operator can loosen the setscrews 40 and 50 to move the lower feeding portion 37 in the left-right direction. The operator determines a position of the lower feeding portion 37. Then the operator can fasten the setscrews 40 and 50 and fix the lower feeding portion 37.

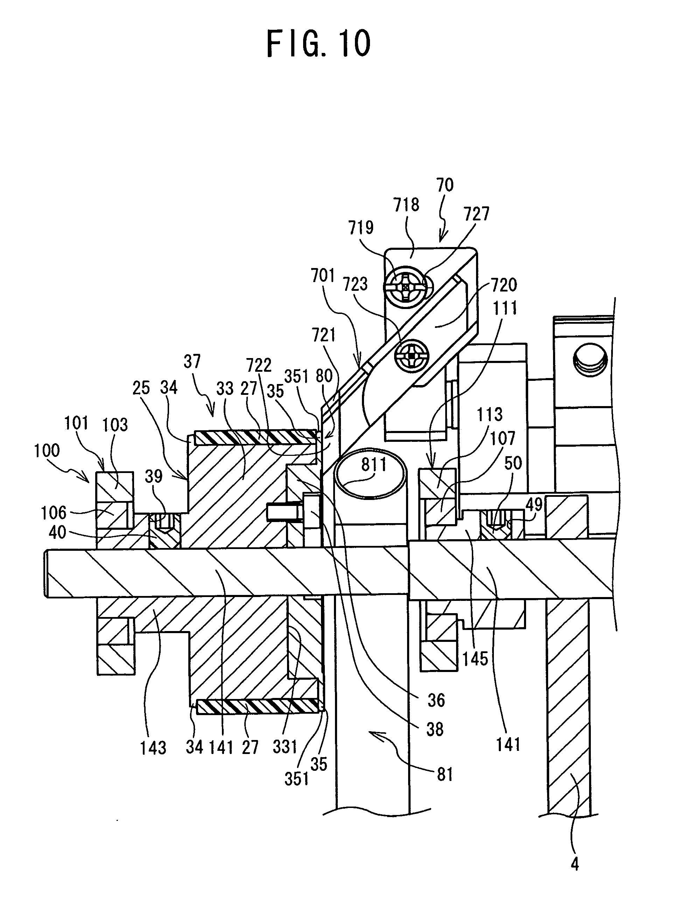

Figs. 9 and 10 show the states in which the lower feeding portion 37 has been moved leftward and rightward, respectively. By moving the lower feeding portion 37, the operator can move the position of the first blade 35 in the left-right direction. The second blade 721 can also be moved in the left-right direction, details of which will be described later. In other words, the operator can move the cutting position 80 in the left-right direction. Therefore, the operator can adjust the cutting position 80 with respect to a position where the nozzle 17 applies the adhesive.

As shown in Figs. 6 and 7, the second pulley 28 includes flanges 63 and 64 protruding from the left and right faces of the second pulley 28 in a radially outward direction. The flanges 63 and 64 sandwich the feed belt 27 from left and right. Therefore, when the feed belt 27 is operated, the feed belt 27 does not come off the second pulley 28.

The suction pipe 81 will be described. The suction pipe 81 is connected to the scrap collecting portion 8 (see Fig. 1). As shown in Figs. 6 to 10, the suction pipe 81 is cylindrical in shape. The suction pipe 81 is provided between the first pulley 25 and the right side plate 111 and behind the rotation shaft 141. The suction pipe 81 extends in the vertical direction, and its upper portion slightly bends forward. An opening 811 is formed in an upper end of the suction pipe 81. The suction pipe 81 is located on a side that is opposite from a side where the first pulley 25 is located, with respect to the cutting position 80. More specifically, the cutting position 80 is located slightly to the upper left of the opening 811. The suction pipe 81 sucks a scrap of a cloth which has been cut at the cutting position 80, and guides the scrap to the scrap collecting portion 8. As described above, the bolt 38 is not projecting rightward of the first blade 35. Therefore, the suction pipe 81 can be disposed in the vicinity of the first blade 35. The suction pipe 81 can suck the scrap efficiently. The suction pipe 81 can be moved in accordance with a movement of the cutting position 80 in the left-right direction.

The second blade drive mechanism 70 having the second blade 721 will be described with reference to Figs. 6 to 13. The second blade drive mechanism 70 transmits power of a motor 709 that will be described later, thereby causing the second blade 721 to come into contact with and separate from the first blade 35. The second blade drive mechanism 70 is connected to the control box 3 (see Fig. 1) through an electric wiring. The second blade 721 and the first blade 35 may sandwich and cut a cloth. The second blade drive mechanism 70 is disposed in the bed portion 11.

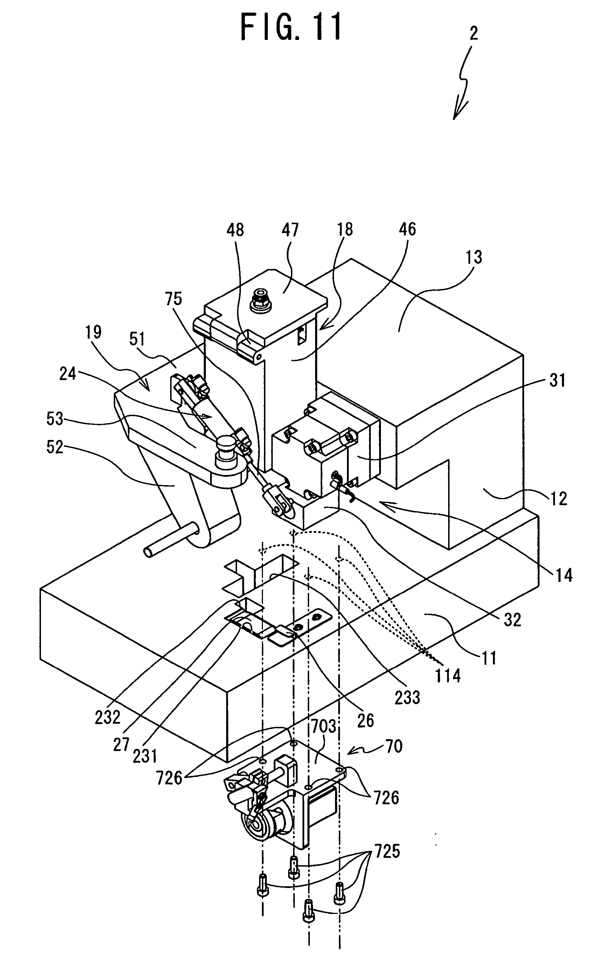

The second blade drive mechanism 70 can be mounted to and removed from the bed portion 11. When cutting cloths, the operator mounts the second blade drive mechanism 70 inside of the bed portion 11. As shown in Fig. 11, the second blade drive mechanism 70 can be fixed to the bed portion 11 with four bolts 725. The bolts 725 can be inserted through four through holes 726 formed in a first support plate portion 703, which will be described later, and fix the second blade drive mechanism 70 to the bed portion 11. Four bolt holes 114 are formed in the bed portion 11 through which the four bolts 725 can be inserted to fix the second blade drive mechanism 70.

When a cloth is not to be cut, the operator may remove the second blade drive mechanism 70 from the bed portion 11. The operator may put a lid (not shown) over the holes 232 and 233 after the second blade drive mechanism 70 is removed, so that a wider area of the upper surface of the bed portion 11 can be utilized.

As shown in Figs. 6 to 8, the second blade drive mechanism 70 includes a support plate 702. The support plate 702 supports various members of the second blade drive mechanism 70. The support plate 702 includes the first support plate portion 703 and a second support plate portion 705. The first support plate portion 703 and the second support plate portion 705 are integrally formed. The first support plate portion 703 is a plate member extending in the horizontal direction. A portion of a front portion of the first support plate portion 703 extending from its central portion to its left side is cut out rearwardly. A portion of a rear portion of the first support plate portion 703 extending from its slightly left side of its central portion to its left side is cut out forwardly. Therefore, the portion of the first support plate portion 703 extending from its central portion to its left side forms a projection portion 704 projecting leftward. The four through holes 726 are formed in a rectangular portion of the first support plate portion 703 extending from its central portion to its right side. The through holes 726 are formed at positions of apices of the rectangular portion as viewed from above. Each through hole 726 penetrates the first support plate portion 703 in the vertical direction.

The second support plate portion 705 is a plate-like member extending downward from a central portion of the first support plate portion 703 in the left-right direction. A length of the second support plate portion 705 in the front-rear direction is the same as a length of the first support plate portion 703 in the front-rear direction.

A support portion 706 is provided on an upper side of a left end of the projection portion 704. A support portion 707 is provided on an upper side of a right side of the projection portion 704. The support portion 706 and the support portion 707 rotatably support a shaft portion 708.

The second blade drive mechanism 70 includes the motor 709 that is provided below the first support plate portion 703 and on the right side of the second support plate portion 705. The motor 709 is fixed to the second support plate portion 705. A hole is formed in a substantially central portion of the second support plate portion 705. A rotation shaft 710 of the motor 709 extends from a left side of the motor 709. The rotation shaft 710 projects to a left side of the second support plate portion 705 through the hole of the second support plate portion 705.

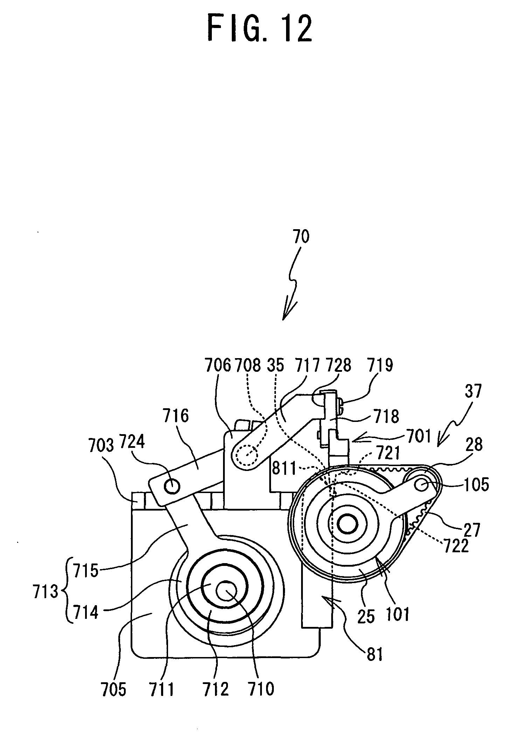

As shown in Fig. 12, a cylindrical column member 711 is fixed to a periphery of a left end of the rotation shaft 710. A rotation center of the rotation shaft 710 is offset from a center of the cylindrical column member 711. A bearing 712 is provided around the cylindrical column member 711. A first drive portion 713 is provided around the bearing 712. The first drive portion 713 includes a ring portion 714 that encircles the bearing 712 along its outer periphery, and a projection portion 715 projecting rearward and diagonally upward from the ring portion 714.

One end of a second drive portion 716 is connected to an upper end of the projection portion 715 through a shaft portion 724. As shown in Figs. 6 to 8 and 12, the second drive portion 716 extends from the shaft portion 724 forward and slightly upward. The other end of the second drive portion 716 is fixed to the shaft portion 708. The shaft portion 708 projects leftward of the support portion 706. A third drive portion 717 is fixed to a left end of the shaft portion 708. The third drive portion 717 extends forward and diagonally upward from the shaft portion 708. A tip end of the third drive portion 717 bends forward.

The second blade body fixed portion 718 is fixed to the tip end of the third drive portion 717 with a bolt 719. The second blade body 701 is fixed to the second blade body fixed portion 718. The second blade body 701 includes the second blade 721. A recessed portion 728 is formed in a rear face of the second blade body fixed portion 718. The recessed portion 728 is recessed forward and extends in the left-right direction. A vertical dimension of the recessed portion 728 corresponds to a vertical dimension of the tip end of the third drive portion 717. The tip end of the third drive portion 717 is fitted into the recessed portion 728.

As shown in Fig. 9, the second blade body fixed portion 718 includes a long hole 727 that is long in the left-right direction. The third drive portion 717 includes a bolt hole (not shown) formed in its surface that contacts the second blade body fixed portion 718. This hole has an opening with a circular shape corresponding to a shaft diameter of the bolt 719. The bolt 719 is inserted into the hole through the long hole 727. A head of the bolt 719 and the third drive portion 717 sandwich the second blade body fixed portion 718, thereby fixing the second blade body fixed portion 718.

The operator can loosen the bolt 719 and move a position of the second blade body fixed portion 718 in the left-right direction within a range of the long hole 727. The operator can determine a position of the second blade body fixed portion 718 in the left-right direction. The operator can then fasten the bolt 719 to fix the second blade body fixed portion 718. As shown in Figs. 9 and 10, the second blade 721 of the second blade body 701 can be moved in the left-right direction by the above-described method. The operator can move the cutting position 80 by thus moving the first blade 35 and the second blade 721 in the left-right direction.

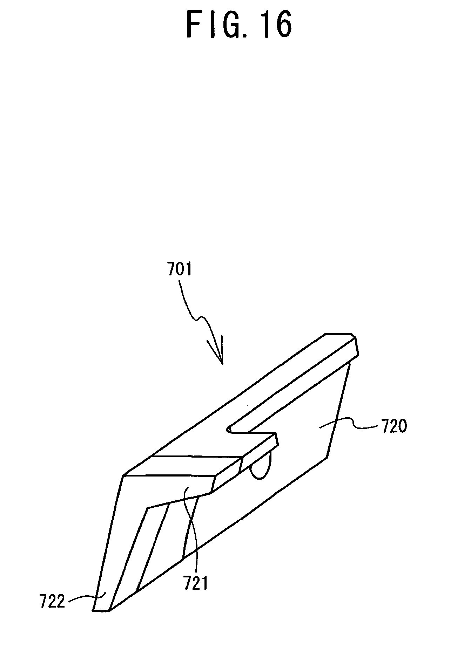

As shown in Figs. 6 to 10, 12 and 13, the second blade body 701 extends leftward and downward from the second blade body fixed portion 718. The second blade body 701 has substantially a parallelogram shape in a front view. As shown in Fig. 16, the second blade body 701 includes a fixed portion 720, the second blade 721 and a guide portion 722. The fixed portion 720 is fixed to the second blade body fixed portion 718 with a bolt 723. The guide portion 722 extends in the vertical direction in a side view, and extends leftward from the fixed portion 720. The guide portion 722 is in contact with a surface of the first blade 35 that extends in the vertical direction. The second blade 721 projects further forward (front face side of the sheet of Fig. 9) with respect to the guide portion 722. A left end surface of the second blade 721 and a left end surface of the guide portion 722 are on the same plane. As the second blade body 701 vertically moves, the second blade 721 repeatedly separates from and comes into contact with the first blade 35. The guide portion 722 guides the vertical motion of the second blade body 701 to prevent the second blade 721 from colliding against the first blade 35. In a case where there is no possibility of collision between the first blade 35 and the second blade 721, the guide portion 722 can be omitted.

An operation of driving the second blade 721 by the second blade drive mechanism 70 will be described. The motor 709 rotates the rotation shaft 710. As the rotation shaft 710 rotates, the cylindrical column member 711 rotates. As shown in Fig. 12, a rotation center of the rotation shaft 710 does not coincide with a rotation center of the cylindrical column member 711. Therefore, when the rotation shaft 710 rotates, an upper end of the projection portion 715 reciprocates between an upper rear position and a lower front position. The reciprocating drive of the projection portion 715 drives the second drive portion 716 through the shaft portion 724. The second drive portion 716 repeatedly swings in a clockwise direction and a counterclockwise direction in an alternate manner in a left side view. The swinging motion of the shaft portion 708 drives the third drive portion 717. The third drive portion 717 repeatedly swings around the shaft portion 708 in a clockwise direction and a counterclockwise direction in an alternate manner in a left side view.

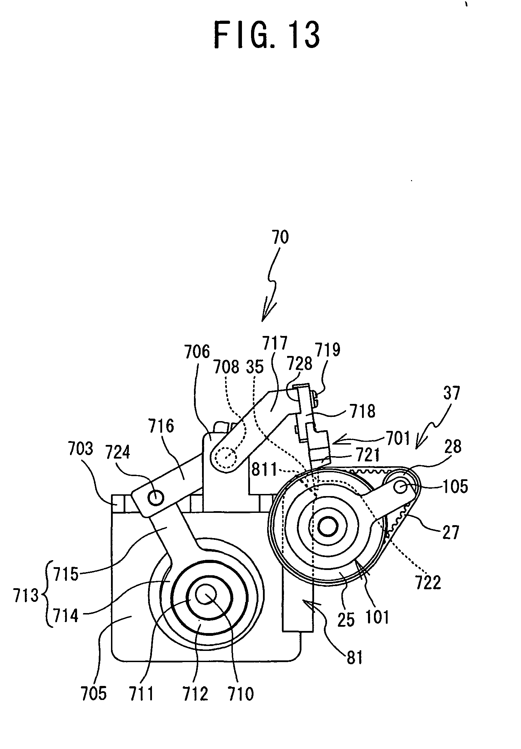

As shown in Fig. 13, when the third drive portion 717 swings in the counterclockwise direction, the second blade 721 separates from the first blade 35. As shown in Fig. 12, when the third drive portion 717 swings in the clockwise direction, the second blade 721 comes into contact with the first blade 35. In other words, while the motor 709 is driven, the first blade 35 and the second blade 721 repeat a contact motion and a separating motion. The first blade 35 and the second blade 721 sandwich and cut cloths at the cutting position 80.

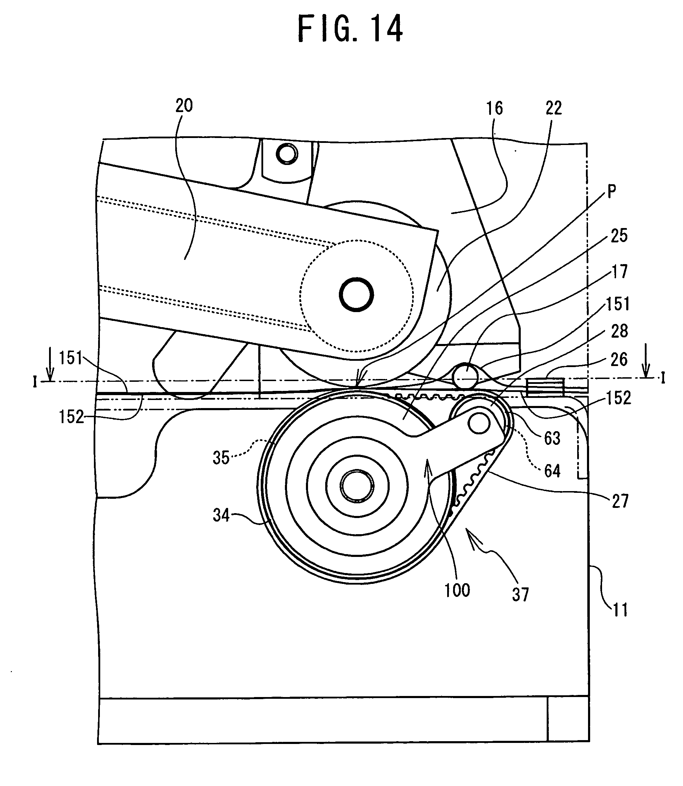

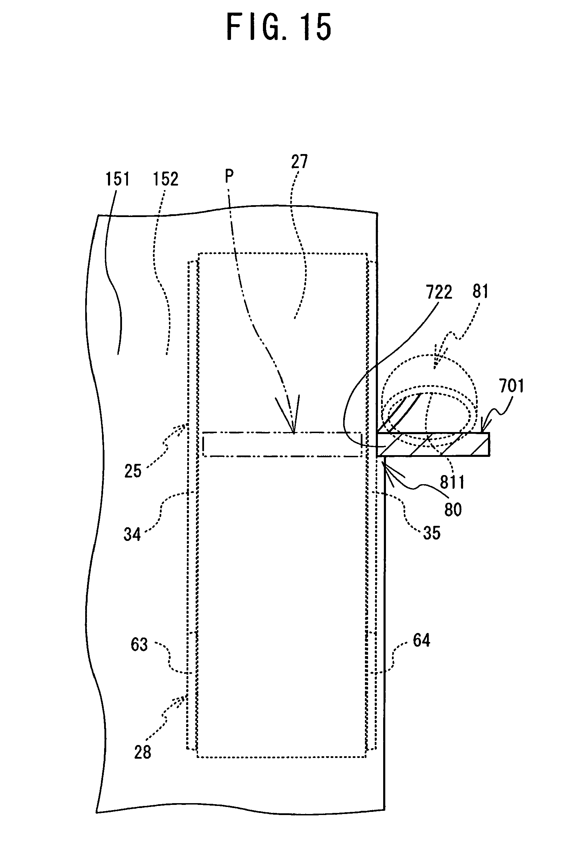

An operation of the bonding machine 2 at the time of a bonding work in which an upper cloth 151 and a lower cloth 152 are bonded will be described with reference to Figs. 14 and 15. In Fig. 15, only a partial configuration is illustrated for explanation. For example, the upper feed roller 22 and the like is not illustrated. As shown in Fig. 14, when the operator performs the bonding work using the bonding machine 2, the operator sandwiches the lower cloth 152 between the feed belt 27 and the nozzle 17. The operator disposes the upper cloth 151 on the lower cloth 152. The upper cloth 151 and the lower cloth 152 sandwich the nozzle 17. The guide portion 26 aligns right ends of the upper cloth 151 and the lower cloth 152 in front of the nozzle 17.

When the operator depresses a pedal 208 (see Fig. 1) in this state, the gear pump 124 (see Fig. 5) is driven. The adhesive is supplied through the channels and discharged from the nozzle 17, and the adhesive adheres onto the lower cloth 152. At the same time, the first pulley 25 rotates. As the first pulley 25 rotates, the feed belt 27 rotates. The upper feed roller 22 and the feed belt 27 rotate in a direction in which the upper cloth 151 and the lower cloth 152 are fed from front to back. The spring 21 (see Fig. 2) urges the upper feed roller 22 downward. Therefore, the upper feed roller 22 and the feed belt 27 press the upper cloth 151 and the lower cloth 152. A region in which the upper feed roller 22 and the feed belt 27 press the upper cloth 151 and the lower cloth 152 is referred to as a pressing region P. In Fig. 15, the pressing region P is shown with a dashed two dotted line.

As shown in Fig. 15, the cutting position 80 is located on the right side of the pressing region P. As the first pulley 25 rotates, the first blade 35 rotates. The second blade 721 repeatedly comes into contact with (see Fig. 12) and separates from (see Fig. 13) the first blade 35. The first blade 35 and the second blade 721 sandwich and cut portions of the upper cloth 151 and the lower cloth 152 on the right side of the pressing region P. The upper feed roller 22 and the feed belt 27 feed the upper cloth 151 and the lower cloth 152 rearward after cutting.

When the first blade 35 and the second blade 721 cut the upper cloth 151 and the lower cloth 152, lint and scraps of the cloths are generated. The suction pipe 81 sucks the lint and the scraps. The scrap collecting portion 8 (see Fig. 1) collects the lint and scraps. The bonding machine 2 cuts the upper cloth 151 and the lower cloth 152 while sucking the lint and scraps through the suction pipe 81. Therefore, the lint and scraps may not remain on a surface of the upper cloth 151. Thus, the bonding machine 2 can reliably prevent positional deviation of to-be cut portions of the upper cloth 151 and the lower cloth 152 that may be caused due to remaining scraps. As a result, the bonding machine 2 can cut the upper cloth 151 and the lower cloth 152 at a desired position, while preventing scraps from being scattered on the upper surface of the bed portion 11.

As described above, the cloth bonding apparatus 1 can bond the upper cloth 151 and the lower cloth 152 with each other. The bonding strength between the upper cloth 151 and the lower cloth 152 may be weak immediately after the upper cloth 151 and the lower cloth 152 are bonded with each other. In a case where the upper cloth 151 and the lower cloth 152 are cut at a position that is rearwardly separated from the pressing region P, the upper cloth 151 and the lower cloth 152 may be misaligned from each other. In the present embodiment, however, the upper feed roller 22 and the feed belt 27 sandwich and fix the upper cloth 151 and the lower cloth 152 in the pressing region P, and the cutting position 80 is located on the right side of the pressing region P. The cutting position 80 is located in a direction that is parallel to a surface of the feed belt 27 opposed to the upper feed roller 22, and that is perpendicular to the feeding direction of the upper cloth 151 and the lower cloth 152. The cloth bonding apparatus 1 can cut cloths in the vicinity of the pressing region P. Therefore, the cloth bonding apparatus 1 can cut the upper cloth 151 and the lower cloth 152 such that the upper cloth 151 and the lower cloth 152 are not misaligned from each other.

Since the circular member 36 having the first blade 35 is integrally assembled to the first pulley 25, the first blade 35 and the first pulley 25 rotate in unison. The first blade 35 is located in the vicinity of the feed belt 27. Therefore, the cloth bonding apparatus 1 can cut a cloth at a position in the vicinity of the pressing region P, thereby preventing the upper cloth 151 and the lower cloth 152 from being misaligned from each other. An operator can loosen the setscrew 40 and the setscrew 50 and move the lower feeding portion 37 in a direction perpendicular to the feeding direction of the upper cloth 151 and the lower cloth 152. Accordingly, the cutting position 80 can also be moved in the same direction. The cutting position 80 can be moved in a direction that is parallel to the surface of the feed belt 27 opposed to the upper feed roller 22 and that is perpendicular to the feeding direction of the upper cloth 151 and the lower cloth 152.

The cloth bonding apparatus 1 can cut cloths by sandwiching the cloths between the first blade 35 and the second blade 721. Therefore, the cloth bonding apparatus 1 can reliably cut the cloths. Since the first blade 35 rotates as the first pulley 25 rotates, it is unnecessary to separately provide an electric wiring or a mechanism for rotating the first blade 35. Therefore, costs of the cloth bonding apparatus 1 can be reduced.

In the embodiment, the first pulley 25 and the feed belt 27 correspond to a "first feeding portion" of the present invention. The upper feed roller 22 corresponds to a "second feeding portion" of the present invention. The first blade 35 and the second blade 721 correspond to a "cutting portion" of the present invention. The feed belt 27 corresponds to a "belt" of the present invention. The first pulley 25 corresponds to a "pulley" of the present invention. The second blade drive mechanism 70 corresponds to a "second blade drive mechanism". The cutting position 80 corresponds to a "position where the cutting portion cuts the two layers of cloth " of the present invention. The suction pipe 81 corresponds to a "suction portion" of the present invention. The bolt 38 corresponds to a "connecting member".

## Claims

1. A cloth bonding apparatus (1) comprising:
a nozzle (17) that is adapted to be placed between opposed two layers of cloth and from which an adhesive is dischargeable between the two layers of cloth;
a first feeding portion (25, 27) that is located at a downstream side of the nozzle in a feeding direction of the two layers of cloth and that rotates to feed the two layers of cloth;
a second feeding portion (22) that is opposed to the first feeding portion, that is adapted to sandwich the two layers of cloth between the first feeding portion and second feeding portion, and that rotates to feed the two layers of cloth; and
a cutting portion (35, 721) that is located on a side of the first feeding portion and the second feeding portion and that is adapted to cut the two layers of cloth;
wherein the cutting portion includes a first blade (35) that is provided to the first feeding portion, and that is a rotary blade that rotates in unison with the first feeding portion,
**characterized in that**
the cutting portion further includes a second blade (721) that repeatedly comes into contact with and separates from the first blade (35), and that is adapted to sandwich the two layers of cloth between the first blade (35) and the second blade (721) to cut the two layers of cloth;
wherein the first feeding portion includes:
a belt (27) that is adapted to sandwich the two layers of cloth between the belt (27) and the second feeding portion (22) and that is adapted to feed the two layers of cloth; and
a cylindrical pulley (25) that drives the belt (27), and the first blade (35) is opposed to a side face of the belt (27), and is provided to a side face of the pulley (25).

2. The cloth bonding apparatus according to claim 1, further comprising
a second blade drive mechanism (70) that drives the second blade (721) such that the second blade (721) repeatedly comes into contact with and separates from the first blade (35),
wherein the second blade (721) and the second blade drive mechanism (70) can be mounted to and removed from the cloth bonding apparatus.

3. The cloth bonding apparatus according to claim 1, wherein the first blade (35) does not project toward the second feeding portion (22) with respect to a surface of the belt (27) that is opposed to the second feeding portion (22).

4. The cloth bonding apparatus according to claim 1 or 3, wherein an outer peripheral surface of the first blade (35) is in parallel to a surface of the belt (27) that is opposed to the second feeding portion (22).

5. The cloth bonding apparatus according to any one of claims 1, 3 and 4, wherein a position where the cutting portion cuts the two layers of cloth can be moved in a direction that is parallel to a surface of the belt (27) that is opposed to the second feeding portion (22), and that is perpendicular to the feeding direction of the two layers of cloth.

6. The cloth bonding apparatus according to any one of claims 1, 3, 4 and 5, further comprising a suction portion (81) that is located on an opposite side from a side where the pulley (25) is located with respect to a position (80) where the cutting portion cuts the two layers of cloth, and that is adapted to suck a scrap generated when the cutting portion cuts the two layers of cloth.

7. The cloth bonding apparatus according to claim 6, further comprising a connecting member (38) that does not project further than the first blade (35) in a direction from the pulley (25) to the suction portion, and that connects the first blade (35) and the pulley (25) with each other.

## Patentansprüche

1. Tuchfügegerät (1) mit:
einer Düse (17), die daran angepasst ist, zwischen zwei gegenüberliegenden Tuchlagen platziert zu werden, und aus der ein Klebemittel zwischen den beiden Tuchlagen ausgelassen werden kann;
einem ersten Vorschubabschnitt (25, 27) der sich an einer stromabwärtigen Seite der Düse in einer Vorschubrichtung der beiden Tuchlagen befindet und der sich dreht, um die beiden Tuchlagen vorzuschieben;
einem zweiten Vorschubabschnitt (22), der dem ersten Vorschubabschnitt gegenüberliegt, der daran angepasst ist, die beiden Tuchlagen zwischen dem ersten Vorschubabschnitt und dem zweiten Vorschubabschnitt einzufassen, und der sich zum Vorschieben der beiden Tuchlagen dreht;
einem Schneidabschnitt (35, 721) der sich an einer Seite des ersten Vorschubabschnitts und des zweiten Vorschubabschnitts befindet und der daran angepasst ist, die beiden Tuchlagen zu schneiden;
wobei der Schneidabschnitt eine erste Klinge (35) aufweist, die an dem ersten Vorschubabschnitt vorgesehen ist, und die eine Drehklinge ist, die sich im Einklang mit dem ersten Vorschubabschnitt dreht,
**dadurch gekennzeichnet, dass**
der Schneidabschnitt des Weiteren eine zweite Klinge (721) aufweist, die mit der ersten Klinge (35) wiederholt in Kontakt gelangt und von dieser getrennt wird, und die daran angepasst ist, die beiden Tuchlagen zwischen der ersten Klinge (35) und der zweiten Klinge (721) einzufassen, um die beiden Tuchlagen zu schneiden;
wobei der erste Vorschubabschnitt Folgendes aufweist:
einen Riemen (27), der daran angepasst ist, die beiden Tuchlagen zwischen dem Riemen (27) und dem zweiten Vorschubabschnitt (22) einzufassen, und der daran angepasst ist, die beiden Tuchlagen vorzuschieben; und
eine zylindrische Riemenscheibe (25), die den Riemen (27) antreibt, wobei die erste Klinge (35) einer Seitenfläche des Riemens (27) gegenüberliegt und an einer Seitenfläche der Riemenscheibe (25) vorgesehen ist.

2. Tuchfügegerät gemäß Anspruch 1, des Weiteren mit:
einem zweiten Klingenantriebsmechanismus (70), der die zweite Klinge (721) derart antreibt, dass die zweite Klinge (721) mit der ersten Klinge (35) wiederholt in Kontakt gelangt und von dieser getrennt wird,
wobei die zweite Klinge (721) und der zweite Klingenantriebsmechanismus (70) an das Tuchfügegerät montiert und von diesem entnommen werden können.

3. Tuchfügegerät gemäß Anspruch 1,
wobei die erste Klinge (35) nicht zu dem zweiten Vorschubabschnitt (22) hinsichtlich einer Fläche des Riemens (27) vorsteht, die dem zweiten Vorschubabschnitt (22) gegenüberliegt.

4. Tuchfügegerät gemäß Anspruch 1 oder 3,
wobei eine Außenumfangsfläche der ersten Klinge (35) parallel zu einer Fläche des Riemens (27) ist, die dem zweiten Vorschubabschnitt (22) gegenüberliegt.

5. Tuchfügegerät gemäß einem der Ansprüche 1, 3 und 4, wobei eine Position, an der der Schneidabschnitt die beiden Tuchlagen schneidet, in einer Richtung bewegt werden kann, die parallel zu einer Fläche des Riemens (27) ist, die dem zweiten Vorschubabschnitt (22) gegenüberliegt, und die senkrecht zu der Vorschubrichtung der beiden Tuchlagen ist.

6. Tuchfügegerät gemäß einem der Ansprüche 1, 3, 4 und 5, des Weiteren mit einem Saugabschnitt (81), der sich an einer Seite befindet, die jener Seite gegenüberliegt, an der sich die Riemenscheibe (25) hinsichtlich einer Position (80) befindet, an dem der Schneidabschnitt die beiden Tuchlagen schneidet, und der daran angepasst ist, Verschnitt anzusaugen, der dann erzeugt wird, wenn der Schneidabschnitt die beiden Tuchlagen schneidet.

7. Tuchfügegerät gemäß Anspruch 6, des Weiteren mit einem Verbindungselement (38), das in einer Richtung von der Riemenscheibe (25) zu dem Saugabschnitt nicht weiter vorsteht als die erste Klinge (35), und das die erste Klinge (35) mit der Riemenscheibe (25) verbindet.

## Revendications

1. Dispositif de collage de tissu (1) comprenant :
un injecteur (17) qui est adapté de manière à être placé entre deux couches opposées de tissu et à partir duquel un adhésif peut être distribué entre les deux couches de tissu ;
une première partie d'alimentation (25, 27) qui est située d'un côté aval de l'injecteur dans une direction d'alimentation des deux couches de tissu et qui tourne afin de délivrer les deux couches de tissu ;
une seconde partie d'alimentation (22) qui est opposée à la première partie d'alimentation, qui est adaptée afin d'intercaler les deux couches de tissu entre la première partie d'alimentation et la seconde partie d'alimentation, et qui tourne afin de délivrer les deux couches du tissu ; et
une partie de découpe (35, 721) qui est située sur un côté de la première partie d'alimentation et la seconde partie d'alimentation et qui est adaptée de manière à couper les deux couches de tissu ;
dans lequel la partie de découpe comporte une première lame (35) qui est formée sur la première partie d'alimentation, et qui est une lame tournante qui tourne simultanément avec la première partie d'alimentation ;
**caractérisé en ce que** :
la partie de découpe comporte en outre une seconde lame (721) qui entre de manière répétitive en contact avec la première lame (35) et se sépare de celle-ci, et qui est adaptée afin d'intercaler les deux couches de tissu entre la première lame (35) et la seconde lame (721) de manière à couper les deux couches du tissu ;
dans lequel la première partie d'alimentation comporte :
une courroie (27) qui est adaptée afin d'intercaler les deux couches de tissu entre la courroie (27) et la seconde partie d'alimentation (22), et qui est adaptée de manière à délivrer les deux couches de tissu ; et
une poulie cylindrique (25) qui entraîne la courroie (27), et la première lame (35) est opposée à une face latérale de la courroie (27) et est formée sur une face latérale de la poulie (25).

2. Dispositif de collage de tissu selon la revendication 1, comprenant en outre :
un second mécanisme d'entraînement de lame (70) qui entraîne la seconde lame (721) de telle sorte que la seconde lame (721) entre, de manière répétitive, en contact avec la première lame (35) et se sépare de celle-ci,
dans lequel la seconde lame (721) et le second mécanisme d'entraînement de lame (70) peuvent être montés sur le dispositif de collage de tissu et séparés de celui-ci.

3. Dispositif de collage de tissu selon la revendication 1, dans lequel la première lame (35) ne s'étend pas vers la seconde partie d'alimentation (22) par rapport à une surface de la courroie (27) qui est opposée à la seconde partie d'alimentation (22).

4. Dispositif de collage de tissu selon la revendication 1 ou 3, dans lequel une surface périphérique externe de la première lame (35) est en parallèle à une surface de la courroie (27) qui est opposée à la seconde partie d'alimentation (22).

5. Dispositif de collage de tissu selon l'une quelconque des revendications 1, 3 et 4, dans lequel une position dans laquelle la partie de découpe coupe les deux couches de tissu peut être déplacée dans une direction qui est parallèle à une surface de la courroie (27) qui est opposée à la seconde partie d'alimentation (22), et qui est perpendiculaire à la direction d'alimentation des deux couches de tissu.

6. Dispositif de collage de tissu selon l'une quelconque des revendications 1, 3, 4 et 5, comprenant en outre une partie d'aspiration (81) qui est située sur un côté opposé à partir d'un côté sur lequel la poulie (25) est située par rapport à une position (80) dans laquelle la partie de découpe coupe les deux couches de tissu, et qui est adaptée afin d'aspirer une chute produite lorsque la partie de découpe coupe les deux couches de tissu.

7. Dispositif de collage de tissu selon la revendication 6, comprenant en outre un élément de liaison (38) qui ne s'étend pas davantage que la première lame (35) dans une direction partant de la poulie (25) vers la partie d'aspiration, et qui relie la première lame (35) et la poulie (25) l'une à l'autre.
